# EUROPEAN PATENT APPLICATION

(11) **EP 4 163 472 A1**
(43) Date of publication of application: **12.04.2023**
(21) Application number: 21202036.6
(22) Date of filing: 11.10.2021
(51) Int. Cl.: E21B 23/00, E21B 23/14, H02P 5/00

(54) **HYDRAULICALLY DRIVEN SELF-PROPELLING WIRELINE TOOL**

(71) Applicant: Welltec A/S, 3450 Allerød (DK)
(72) Inventor: THOMSEN, Brian Engelbrecht, 3450 Allerød (DK)
(74) Representative: Dragsted Partners A/S

(57) **Abstract**

A method for controlling a downhole self-propelling wireline tool (1) having wheels (8) rotated by means of hydraulics, an electric motor rotating at an operational rotational speed for driving a first pump (12); supplying electric power to the downhole self-propelling wireline tool (1); determining a motor output torque of the electric motor; determining a maximum allowable motor rotational speed based on the motor output torque; and comparing the operational rotational speed with the maximum allowable motor rotational speed, wherein the method further comprises adjusting the operational rotational speed of the electric motor based on the comparison in order to adjust the first speed to a second speed if the operational rotational speed is higher than the maximum allowable motor rotational speed.

## Description

The present invention relates to a method for controlling a tool string having a downhole self-propelling wireline tool having wheels rotated by means of hydraulics and connected to projectable arm assemblies projected by hydraulics. The invention also relates to a downhole hydraulically driven self-propelling wireline tool configured to perform the method.

Well intervention is carried out for various reasons to perform an operation such as pulling a sleeve, milling a nipple, pulling or setting a plug. Well intervention is often powered through a wireline, and the operational tool is propelled down the well by means of a self-propelling wireline tool for pulling the wireline as the operational tool is moved down the more inaccessible, deviated or horizontal part of the well to the position in which the operation is to be performed. In order to be able to provide sufficient pulling force for pulling the wireline far down the well, the self-propelling wireline tool is a hydraulically driven tool having wheels on wheel arms where each wheel is driven by a hydraulic motor in the wheel, and the wheel is pressed against the wall of the casing or the borehole also by means of hydraulics. Such hydraulically driven self-propelling wireline tools provide more pulling force than electrically driven self-propelling wireline tools, but suffer from the inability to drive as fast as the electrically driven self-propelling wireline tools.

In order for the hydraulically driven self-propelling wireline tool to be able to drive faster, the hydraulic section of the hydraulically driven self-propelling wireline tool has been developed in several ways. One solution is that a front part of the hydraulically driven wheels has been disconnected so that all hydraulic power is used for driving the remaining wheels in order to drive faster, as known from WO2017/142415. Such solution is restricted to two modes, and thus two speeds: a fast mode where only some of the wheels are driven by the hydraulic fluid and the other wheels are disconnected, and a full force mode where all wheels are driven by the hydraulic fluid, but at very slow speed. In WO2019/004834, the hydraulic section is provided with a bypass supply line also in order to bypass the front part of the hydraulic wheels instead of disconnecting the front part, which is thus an attempt to make the hydraulically driven self-propelling wireline tool drive faster, but with only a low pulling force, and when more pulling force is needed, some wheels are no longer bypassed, and then the speed of the self-propelling wireline tool is reduced to a very low speed. In order to be able to better control weight on bit, the hydraulic section in WO2018/067018 is provided with a pressure-setting valve which is configured for feeding excess hydraulic fluid in the first hydraulic supply line for pressing the wheels outwards to the second hydraulic supply line for driving the hydraulic motors in the wheels to increase the speed of the downhole tractor. However, feeding excess hydraulic fluid for pressing the wheels outwards to the rotational force compromises the maximum pulling force. Despite several attempts to develop a faster hydraulically driven self-propelling wireline tool by way of a controllable hydraulic section, such hydraulically driven self-propelling wireline tool is either restricted to two modes or compromises the maximum pulling force.

The electrically driven self-propelling wireline tool suffers from the inability to provide sufficient pulling force to the electrically driven self-propelling wireline tool for the more inaccessible, deviated or horizontal parts of the well and cannot perform operations in these parts since the electrically driven self-propelling wireline tool cannot pull the wireline that far. Therefore, attempts have been made to make a partly hydraulically driven and partly electrically driven self-propelling wireline tool, but without any proven success so far.

It is an object of the present invention to wholly or partly overcome the above disadvantages and drawbacks of the prior art. More specifically, it is an object to provide an improved method of controlling a hydraulically driven self-propelling wireline tool being able to drive faster without reducing the maximum pulling force.

It is an additional object to provide an improved method of controlling a hydraulically driven self-propelling wireline tool being able to provide the maximum available pulling force due to current restriction in the wireline without reducing the ability to drive fast.

The above objects, together with numerous other objects, advantages and features, which will become evident from the below description, are accomplished by a solution in accordance with the present invention by a method for controlling a tool string having a downhole self-propelling wireline tool having wheels rotated by means of hydraulics and connected to projectable arm assemblies projected by hydraulics, comprising
- running a downhole self-propelling wireline tool into a wellbore, the downhole self-propelling wireline tool being connected to a second end of a wireline and a first end of the wireline being connected to a power supply, the downhole self-propelling wireline tool having a tool body and a plurality of wheels rotated by means of hydraulics, and each wheel being connected to a projectable arm assembly projectable from the tool body by means of hydraulic fluid from a first hydraulic pump, the downhole self-propelling wireline tool having an electric motor rotating at an operational rotational speed for driving the first pump,
- supplying electric power to the downhole self-propelling wireline tool to operate the downhole self-propelling wireline tool at a first speed to urge the downhole self-propelling wireline tool through the wellbore at a first force,
- determining a motor output torque of the electric motor,
- determining a maximum allowable motor rotational speed based on the motor output torque, and
- comparing the operational rotational speed with the maximum allowable motor rotational speed,
wherein the method further comprises adjusting the operational rotational speed of the electric motor based on the comparison in order to adjust the first speed to a second speed if the operational rotational speed is higher than the maximum allowable motor rotational speed.

Thereby, a very simple way of adjusting the speed of the hydraulically driven downhole self-propelling wireline tool is provided as only the motor is adjusted, and the more complex hydraulic section is not adjusted to change the speed of the hydraulically driven downhole self-propelling wireline tool.

The downhole self-propelling wireline tool may further comprise a pressure sensor continuously measuring a second fluid pressure of a second fluid for rotating the wheels, and a hydraulic section comprising a first controllable valve controlling a first fluid pressure for projecting the arm assemblies based on the second fluid pressure. The hydraulic section may merely adjust the first controllable valve for controlling the first fluid pressure based on the second pressure and thus optimising to ensure that sufficient power is submitted to the wheel arms, but not more than needed. The speed of the hydraulically driven downhole self-propelling wireline tool is thus adjusted continuously using all available power, i.e. below the current limit, either for driving at a maximum speed or at the required force and the corresponding maximum allowable speed, and the hydraulically driven downhole self-propelling wireline tool is able to drive at maximum speed until the force to pull the wireline increases to a first force at the power limit curve, above which first force the speed of the rotational speed of the electric motor needs to be reduced so that the current limit is not exceeded. The hydraulically driven downhole self-propelling wireline tool is thus controlling itself to continuously adjust its speed to a maximum without exceeding the current limit of the wireline.

By having a first controllable valve controlling the first fluid pressure based on the second pressure, the continous control of the hydraulically driven downhole self-propelling wireline tool is optimised even further to ensure that no power is wasted on projecting the arm assemblies out towards the wall of the well other than to the extent needed for an optimal friction between the wheels and the wall to drive the hydraulically driven downhole self-propelling wireline tool forward.

Furthermore, adjusting the operational rotational speed of the electric motor based on the comparison may be performed independently of any condition of the wireline, such as drag in the wireline, wireline tension, or wireline resistance.

Also, adjusting the operational rotational speed of the electric motor based on the comparison may be performed independently of any pump condition, such as pump flow, pump pressure, or stroke length.

In addition, adjusting the operational rotational speed of the electric motor based on the comparison may be performed independently of any condition of the speed of the downhole self-propelling wireline tool.

Moreover, the first speed of the downhole self-propelling wireline tool may be adjusted to the second speed by adjusting the operational rotational speed of the electric motor.

Further, the method may also comprise determining the operational rotational speed of the electric motor.

Additionally, determining the output torque of the electric motor may be performed by measuring current over the three phases in the electric motor.

Furthermore, the method may also comprise measuring a current demand/input of the electric motor and measuring a voltage input at the electric motor.

Also, determining the maximum allowable motor speed based on the motor output torque may be based on a measured current and a measured voltage of the electric motor.

In addition, by measuring the actual current demand and the voltage at the electric motor, the maximum allowable motor speed can be determined more precisely as the efficiency of the electric motor varies depending on the operational rotational speed of the electric motor. Thus, at a high rotational speed the current demand is lower than when rotating at a low rotational speed, and the maximum power may therefore be varied to be somewhat larger at high rotational speed than when assuming the maximum power is constant.

Moreover, the adjustment of the operational rotational speed of the electric motor may be based on a measured current demand of the electric motor or a calculated load on the electric motor.

Further, the current demand of the electric motor may be measured by a motor driver in the electric motor.

Additionally, determining a maximum allowable motor rotational speed based on the motor output torque may also be based on a pre-set value for a maximum power or a maximum current.

Furthermore, each wheel may comprise a hydraulic motor for rotation of the wheel and may provide a self-propelling movement, each wheel being connected with a second arm end of one of the projectable arm assemblies, the plurality of projectable arm assemblies being movably connected at a first arm end with the tool body and being projectable from the tool body by means of a first fluid having a first fluid pressure, and the downhole self-propelling wireline tool further comprising a pressure sensor continuously measuring the first fluid pressure.

Also, each hydraulic motor may be driven by a second fluid having a second fluid pressure from the first hydraulic pump or a second hydraulic pump driven by the electric motor.

In addition, the adjustment of the rotational speed of the electric motor may be based on the first fluid pressure.

Moreover, the method may further comprise controlling the first fluid pressure based on the second pressure by means of a first controllable valve in a hydraulic section of the downhole self-propelling wireline tool.

Further, the method may also comprise measuring the rotational speed of the electric motor.

Additionally, the method may further comprise determining the load of motor is determined based on the torque output.

Furthermore, the hydraulic section may comprise a first pressure sensor continuously measuring the second fluid pressure of the second fluid, and the adjustment of the operational rotational speed of the electric motor may be based on the second fluid pressure.

Also, the downhole self-propelling wireline tool may further comprise a machining tool for performing a machining operation and a compression sub comprising a load cell adjacent the machining tool.

In addition, the downhole self-propelling wireline tool may further comprise a logging tool, and the operational rotational speed may be set at a predetermined constant operational rotational speed of the electric motor.

Moreover, the downhole self-propelling wireline tool may also comprise an operational tool having a bit for performing an operation downhole, such as milling, and the method may further comprise measuring the second fluid pressure and estimating a weight on bit (WOB), comparing the estimated weight on bit with a predetermined weight on bit, and adjusting the second fluid pressure based on the comparison.

Further, the downhole self-propelling wireline tool may also comprise a compression sub and an operational tool having a bit for performing an operation downhole, such as milling, and the method may further comprise measuring a weight on the bit by means of the compression sub, comparing the measured weight on bit with a predetermined weight on bit, and adjusting the second fluid pressure based on the comparison.

Additionally, the downhole self-propelling wireline tool may further comprise a second hydraulic pump for generation of the first fluid pressure for projection of the plurality of projectable arm assemblies.

Furthermore, the hydraulic section may also comprise a second controllable valve controlling the second fluid pressure.

Also, the downhole self-propelling wireline tool may further comprise a compensator for providing a predetermined overpressure in the tool.

In addition, the downhole self-propelling wireline tool may further comprise a surface readout module for sending measured tool parameters, such as the first fluid pressure, the second fluid pressure, the operational rotational speed of the electric motor to surface and the motor output torque.

Moreover, the electric motor may comprise a motor driver measuring an operational rotational speed of the electric motor.

Further, the electric control unit may be configured to determine a motor output torque of the electric motor.

Additionally, the electric control unit may comprise a capacitor functioning as an energy storage unit or accumulator.

Furthermore, the hydraulic section may also comprise a second pressure sensor.

Also, the controllable valve(s) may be a controllable pressure relief valve(s).

The invention further relates to a tool string comprising two downhole self-propelling wireline tools mounted as one wireline tool string, where each downhole self-propelling wireline tool has a separate electric control unit, a separate electric motor, one or two hydraulic pumps, a hydraulic section and one or more drive sections.

The invention also relates to a tool string comprising a first downhole self-propelling wireline tool, comprising:
- a tool body,
- an electric motor operating at a rotational speed and powered by a wireline,
- a plurality of projectable arm assemblies movably connected at a first arm end with the tool body and projectable from the tool body by means of a first fluid having a first fluid pressure,
- a plurality of wheels for contacting a wall of the well, each wheel comprising a hydraulic motor for rotation of the wheel and providing a self-propelling movement, each wheel being connected with a second arm end of one of the arm assemblies,
- a first hydraulic pump driven by the electric motor for generation of a second fluid pressure for driving the hydraulic motor(s) rotating the wheel(s), and
- a first pressure sensor continuously measuring the second fluid pressure, wherein the downhole self-propelling wireline tool further comprises a hydraulic section comprising a first controllable valve controlling the first fluid pressure based on the second fluid pressure, and
wherein the tool string further comprises a second downhole self-propelling wireline tool, comprising:
- a tool body,
- a second electric motor operating at a rotational speed and powered by a wireline,
- a plurality of projectable arm assemblies movably connected at a first arm end with the tool body and projectable from the tool body by means of a first fluid having a third fluid pressure,
- a plurality of wheels for contacting a wall of the well, each wheel comprising a hydraulic motor for rotation of the wheel and providing a self-propelling movement, each wheel being connected with a second arm end of one of the arm assemblies,
- at least one second hydraulic pump driven by the second electric motor for generation of a fourth fluid pressure for driving the hydraulic motor(s) rotating the wheel(s), and
- a pressure sensor continuously measuring the fourth fluid pressure,
wherein the second downhole self-propelling wireline tool further comprises a second hydraulic section comprising a third controllable valve controlling the third fluid pressure based on the fourth fluid pressure, the first downhole self-propelling wireline tool being in one end connected with the wireline and in another end with the second downhole self-propelling wireline tool.

Furthermore, the step of running may comprise running both the first and second downhole self-propelling wireline tools into a wellbore, and the step of supplying electric power may comprise supplying electric power to both the first and second downhole self-propelling wireline tools to operate the first and second downhole self-propelling wireline tools at a first speed to urge the tool string through the wellbore at a first force, and the step of determining may comprise determining a motor output torque of both the first and second electric motors, and the step of determining may comprise determining a maximum allowable motor rotational speed based on the motor output torque of both the first and second electric motors, and the step of comparing may comprise comparing the operational rotational speed of both the first and second electric motors with the maximum allowable motor rotational speed, and wherein the step of adjusting may comprise adjusting the operational rotational speed of both the first and second electric motors based on the comparison in order to adjust the first speed to a second speed if the operational rotational speed is higher than the maximum allowable motor rotational speed.

Furthermore, each electric motor may also comprise a power or current-limiting unit in order to distribute a first part of the current from the wireline to power the first electric motor and a second part of the current to power the second electric motor.

In addition, the first and the second downhole self-propelling wireline tools may be electrically connected in parallel.

Moreover, the downhole self-propelling wireline tool may further comprise a current distribution unit in order to distribute a first part of the current from the wireline to power the first electric motor and a second part of the current to power the second electric motor.

Also, the downhole self-propelling wireline tool may comprise a current distribution unit instead of the power-limiting units in order to ditribute a first part of the current from the wireline to power the first electric motor and a second part of the current to power the second electric motor.

Finally, the invention relates to a downhole hydraulically driven self-propelling wireline tool configured to perform the method described above.

The invention and its many advantages will be described in more detail below with reference to the accompanying schematic drawings, which for the purpose of illustration show some non-limiting embodiments and in which:
Fig. 1 shows a downhole self-propelling wireline tool according to the invention having two wheel sections driven by one electric motor and one hydraulic pump,
Fig. 2 shows another downhole self-propelling wireline tool according to the invention having two wheel sections driven by one electric motor and two hydraulic pumps,
Fig. 3 shows yet another downhole self-propelling wireline tool according to the invention having two wheel sections, each wheel section being driven by one electric motor and one hydraulic pump,
Fig. 4 shows yet another downhole self-propelling wireline tool comprising a compression sub and an operational tool for performing an operation in the well, such as milling with a bit,
Fig. 5 shows a downhole self-propelling wireline tool control method according to the present invention with some optional steps,
Fig. 6 shows another downhole self-propelling wireline tool control method with some optional steps of performing an operation downhole,
Fig. 7 shows another downhole self-propelling wireline tool control method, and
Fig. 8 shows a graph of the power curve in relation to the pulling force and the speed of the tool.

All the figures are highly schematic and not necessarily to scale, and they show only those parts which are necessary in order to elucidate the invention, other parts being omitted or merely suggested.

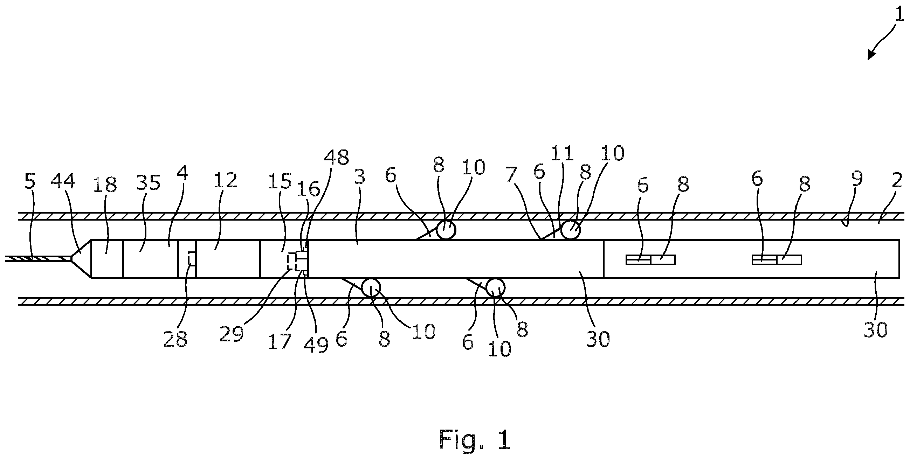

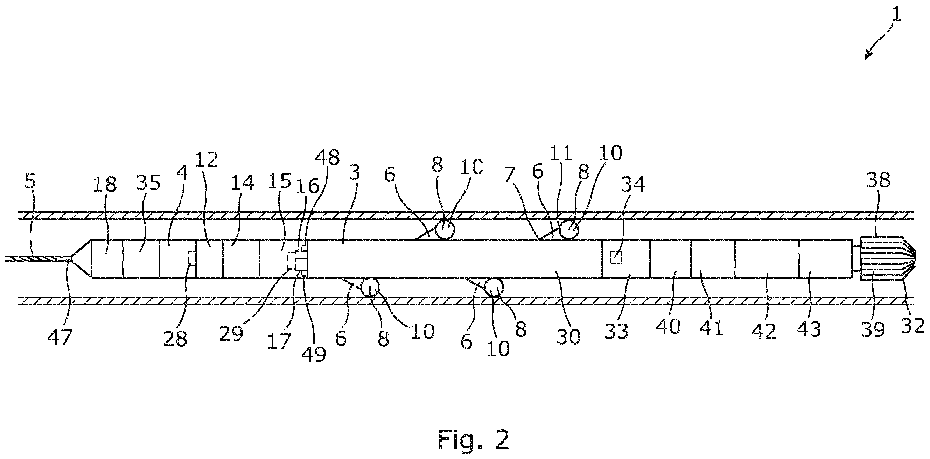

Fig. 1 shows a downhole self-propelling wireline tool 1 for propelling a tool forward in a wellbore 2 and potentially also for providing weight on a bit 39 while performing an operation, as shown in the tool 1 of Fig. 2. The downhole self-propelling wireline tool 1 comprises a tool body 3 and an electric motor 4 operating at an operational rotational speed and powered by a wireline 5. The downhole self-propelling wireline 1 tool further comprises a plurality of projectable arm assemblies 6 movably connected at a first arm end 7 with the tool body 3 and projectable from the tool body 3 by means of a first fluid having a first fluid pressure, and a plurality of wheels 8 for contacting a wall 9 of the well. Each wheel 8 comprises a hydraulic motor 10 for rotation of the wheel 8 to provide a self-propelling movement, and each wheel 8 is connected with a second arm end 11 of one of the projectable arm assemblies 6. The electric motor 4 is configured to drive by rotation a first hydraulic pump 12 for generation of a second fluid pressure for driving the hydraulic motor(s) 10 rotating the wheel(s) 8. The downhole self-propelling wireline tool 1 is connected to a second end 47 of a wireline 5, a first end of the wireline being connected to a power supply (not shown) at the surface or seabed. The downhole self-propelling wireline tool 1 further comprises an electric control unit 18 and a cable head 44 for connecting the tool to the wireline 5. The downhole self-propelling wireline tool 1 further comprises a hydraulic section 15 for controlling the fluid from the pump to the wheels and arm assemblies.

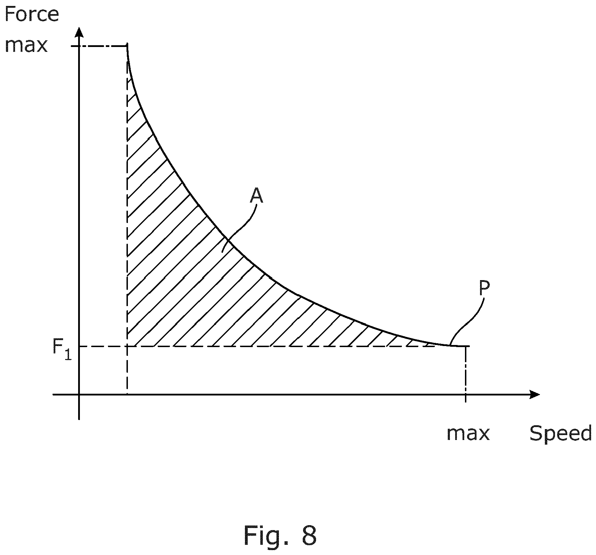

The electric control unit 18 controls the rotational speed of the electric motor 4 and thus also the rotational speed of the pump and the tool speed of the downhole self-propelling wireline tool 1 along the longitudinal extension of the well as the pump generates a fluid flow into the wheels 8. At the beginning of the well, closest to the top of the well, the downhole self-propelling wireline tool 1 requires very little force for pulling the wireline 5 along with the tool, but as the downhole self-propelling wireline tool 1 proceeds down the well, the tool 1 requires an increasing amount of force for pulling the wireline 5. As the force increases, the wheels 8 need higher pressure to rotate, and the pump thus needs more rotational force, i.e. motor output torque, from the motor. The wirelines used for intervention operations where such downhole self-propelling wireline tool 1 is used are rated to a maximum current limit depending on the length of other wireline parameters. Thus, it is important that such current limit is not exceeded. Knowing of the voltage either by assumption or measurement, the power limit P of the operation is known, and this power limit is shown in Fig. 8. When the motor output torque increases, the current demand increases correspondingly, and when the limit is reached, the downhole self-propelling wireline tool 1 needs to reduce its speed, i.e. move along the power limit curve in Fig. 8.

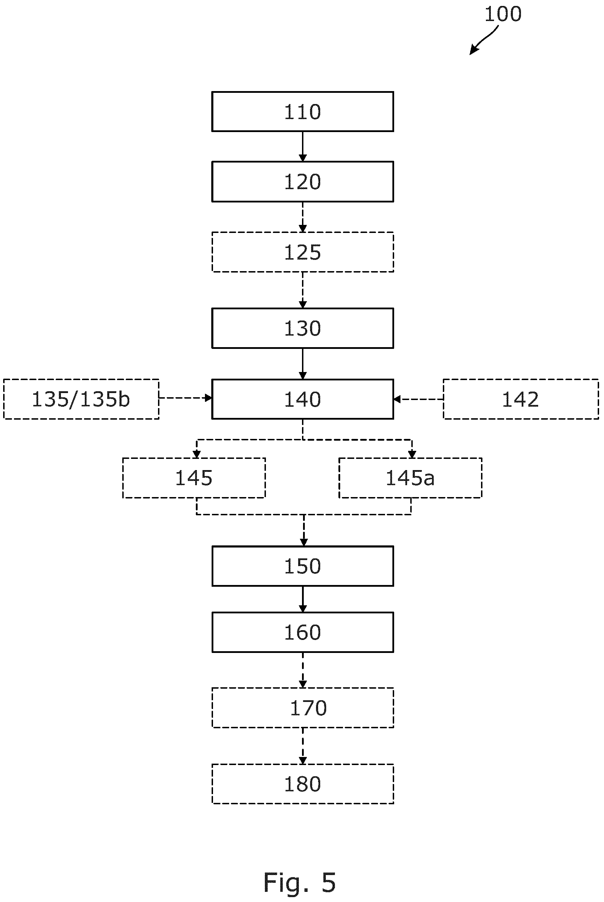

A method 100 for controlling a tool string having the downhole self-propelling wireline tool 1 is illustrated in Fig. 5. The method comprises running 110 the downhole self-propelling wireline tool 1 into the wellbore 2, supplying 120 electric power to the downhole self-propelling wireline tool to operate the downhole self-propelling wireline tool at a first speed to urge the downhole self-propelling wireline tool through the wellbore at a first force, determining 130 a motor output torque of the electric motor, determining 140 a maximum allowable motor rotational speed based on the motor output torque, then comparing 150 the operational rotational speed with the maximum allowable motor rotational speed, and then adjusting 160 the operational rotational speed of the electric motor based on the comparison in order to adjust the first speed to a second speed if the operational rotational speed is higher than the maximum allowable motor rotational speed.

Thereby, a very simple way of adjusting the speed of the hydraulically driven downhole self-propelling wireline tool 1 is provided as only the electric motor 4 is adjusted, and the more complex hydraulic section 15 is not adjusted to change the speed of the hydraulically driven downhole self-propelling wireline tool 1.

The speed of the hydraulically driven downhole self-propelling wireline tool 1 is thus adjusted continuously using all available power, if needed, i.e. below the current limit either for driving at a maximum speed or at the required force and the corresponding maximum allowable speed. The hydraulically driven downhole self-propelling wireline tool is able to drive at maximum speed until the force to pull the wireline increases to a first force F1 at the power limit curve (shown in Fig. 8), above which first force F1 the speed of the rotational speed of the electric motor 4 needs to be reduced so that the current limit is not exceeded, but the speed of the tool 1 is merely adjusted to the speed at which the electric motor 4 is still able to provide enough torque for the tool pull the wireline 5. The hydraulically driven downhole self-propelling wireline tool 1 is thus controlling itself to continuously adjust its speed to a maximum without exceeding the current limit for the wireline and without substantially reducing the maximum pulling.

The known hydraulically driven downhole self-propelling wireline tools may turn off one or more drive sections and thus drive faster at a maximum speed and with a very low first pulling force, using the remaining active drive section, and when more pulling force is needed all drive sections are turned on, and the self-propelling wireline tool then drives at a second minimum speed and a maximum pulling force, as shown in Fig. 8. When at a certain point in the well, the pulling force needed to pull the wireline becomes too high while driving at maximum speed due to the current limit in the wireline, and then the known self-propelling wireline tools having only two modes need to turn on the other drive sections in order to continue and are only able to drive much slower from that point and onwards. From that point and until reaching the point where maximum pulling force is needed, the known self-propelling wireline tools do not use all available power, which is indicated as area A in Fig. 8. So even though some known self-propelling wireline tools are able to drive fast when no substantial pulling force is needed, the hydraulically driven downhole self-propelling wireline tool controlled according to the present method will arrive much faster at the destination in the well as the controlling of the hydraulically driven downhole self-propelling wireline tool makes it possible to adjust the speed, continuously using all available power, i.e. below the current limit. The known self-propelling wireline tools are often set to drive at a lower speed than the maximum speed as then the tool can pull more force and thus drive further before having to turn on the other drive sections, and the known tools therefore often drive slower than the tool controlled according to the present invention.

In Fig. 8, the maximum speed of the hydraulically driven downhole self-propelling wireline tool 1 is based on the maximum allowed rotational speed of the electric motor 4, and the maximum force is based on the minimum allowed rotational speed of the electric motor 4.

In the method of Fig. 5, adjusting the operational rotational speed of the electric motor 4 based on the comparison is performed independently of any condition of the wireline 5, such as drag in the wireline, wireline tension, or wireline resistance. The wireline is somewhat flexible and may vary from well to well, and therefore the present method is advantageous when there is no knowledge of such wireline conditions while the downhole self-propelling wireline tool is running in the well, and the method also suits all wells and wirelines, even though no advanced control wireline unit is available at the rig or top of the well.

Furthermore, in the method of Fig. 5, adjusting the operational rotational speed of the electric motor 4 based on the comparison is performed independently of any pump condition, such as pump flow, pump pressure, or stroke length. Due to the limited space in a well, it is difficult to make room in the pump section for electric wires for such measuring as then the pumping capability would be substantially reduced, and the maximum speed of the downhole self-propelling wireline tool would likewise be reduced. Thus, by controlling the downhole self-propelling wireline tool 1 according to the present method the hydraulic pump is made using the full diameter of the tool, and the maximum speed is thus substantially increased compared to known tools.

Thus, the first speed of the downhole self-propelling wireline tool 1 is adjusted to the second speed by adjusting the operational rotational speed of the electric motor 4. Control is performed without determining the power used, but only by determining 130 a motor output torque of the electric motor 4, determining 140 a maximum allowable motor rotational speed based on the motor output torque, and comparing 150 the operational rotational speed with the maximum allowable motor rotational speed.

In Fig. 5, the method of controlling the downhole self-propelling wireline tool 1 may further comprise determining 145 the rotational speed of the electric motor 4, and determining the output torque of the electric motor may be performed by measuring 125 the current over the three phases in the electric motor.

As can be seen in Fig. 5, the method may also comprise measuring 135 a current demand/input of the electric motor 4 and measuring 135b a voltage input of the electric motor, and then determining 140 a maximum allowable motor speed based on the motor output torque is also based on a measured current and a measured voltage of the electric motor. By measuring the actual current demand and the voltage of the electric motor 4, the maximum allowable motor speed can be determined more precisely as the efficiency of the electric motor varies depending on the operational rotational speed of the electric motor. Thus, at a high rotational speed the current demand is relatively lower than at a low rotational speed due to the varying efficiency of the electric motor 4, and the maximum power may therefore be varied to be somewhat larger at high rotational speed than when assuming the maximum power is constant. In this way, the downhole self-propelling wireline tool 1 is ably to drive at an ever higher maximum speed, and the maximum pulling force is also increased.

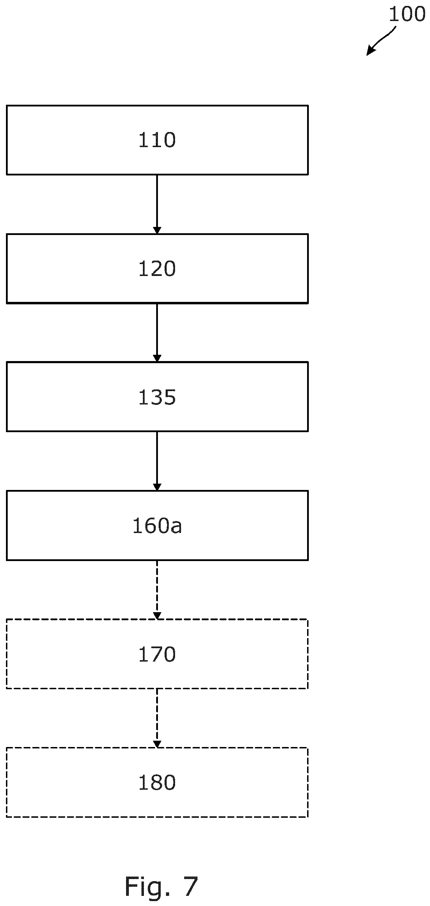

As shown in Fig. 7, the adjusting 160a of the operational rotational speed of the electric motor 4 may also be based on a measured current demand of the electric motor or a calculated load on the electric motor.

In Fig. 1, the electric control unit 18 comprises a motor driver 28, a master and/or or voltage invertor. According to the method of Fig. 5, the electric control unit 18 determines 145 or the motor driver 28 measures 145a an operational rotational speed of the electric motor 4, and the motor driver 28 is configured to measure 125 current over the three phases of the motor for the electric control unit 18 to determine 130 a motor output torque of the electric motor 4. The electric control unit 18 is configured to determine 140 a maximum allowable motor rotational speed based on the motor output torque and to compare 150 the operational rotational speed with the maximum allowable motor rotational speed, and then adjust 160 the operational rotational speed of the electric motor 4 based on the comparison in order to adjust the first speed to a second speed if the operational rotational speed is higher than the maximum allowable motor rotational speed. Optionally, determining 140 a maximum allowable motor rotational speed based on the motor output torque may also be based on pre-set values 142 for maximum power or maximum current. Furthermore, the electric control unit 18 may measure 135 a current demand/input of the motor and measure 135b a voltage input of the electric motor, and determining 140 a maximum allowable motor speed based on the motor output torque may thus also be based on a measured current and a measured voltage of the electric motor 4.

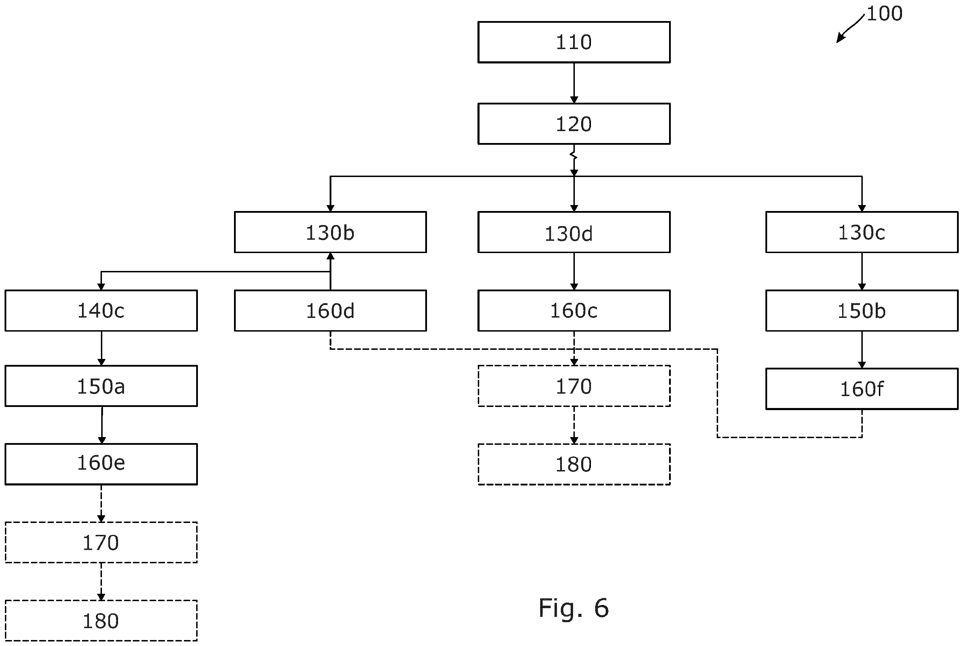

In Fig. 6, the method comprises continuously measuring 130d the first fluid pressure by means of the first pressure sensor 49, and adjusting 160c the rotational speed of the electric motor 4 is based on the first fluid pressure as a supplement to or instead of steps 130-150.

The method as shown in Figs. 5, 6 and 7 further comprises controlling 170 the first fluid pressure based on the second pressure by means of a first controllable valve 16 in the hydraulic section 15 of the downhole self-propelling wireline tool 1. The method may optionally further comprise determining 180 the load on the electric motor 4 based on the torque output.

In Fig. 6, the method comprises continuously measuring 130b the second fluid pressure of the second fluid, and the adjusting 160d) the operational rotational speed of the electric motor is based on the second fluid pressure as a supplement to or instead of steps 130-150.

As shown in Fig. 1, the downhole self-propelling wireline tool 1 further comprises the first pressure sensor 49 continuously measuring a second fluid pressure of a second fluid for powering each hydraulic motor rotating the wheels 8 and the hydraulic section 15 comprising the first controllable valve 16 controlling a first fluid pressure for projecting the arm assemblies based on the second fluid pressure. The hydraulic section 15 may merely adjust the first controllable valve 16 for controlling the first fluid pressure based on the second pressure and thus ensure that sufficient power is submitted to the wheel arms, but not more than needed. By having a first controllable valve 16 controlling the first fluid pressure based on the second pressure, the continous control of the hydraulically driven downhole self-propelling wireline tool 1 is optimised even further so that no power is wasted on projecting the projectable arm assemblies 6 out towards the wall of the well other than what is needed for optimal friction between the wheels and the wall to drive the hydraulically driven downhole self-propelling wireline tool 1 forward.

By having a first controllable valve 16 controlling the first fluid pressure based on the second pressure, the wheels are not pressed more outwards than needed. The higher the second pressure, the higher the first pressure needs to be in order to propel the downhole self-propelling wireline tool 1 forward in the well in the most optimal manner. When having a low second pressure, the first pressure is adjusted to match the low second pressure so that power is not wasted on providing a first fluid pressure higher than needed. Furthermore, if the first fluid pressure is higher than the optimal first fluid pressure matching the present second fluid pressure, then too much friction is applied to the wall of the well, compromising the maximum available velocity of the downhole driving unit.

In Fig. 1, the first hydraulic pump generates the first fluid pressure for projection of the plurality of projectable arm assemblies 6, and in Fig. 2 the downhole self-propelling wireline tool 1 further comprises a second hydraulic pump 14 for generation of the first fluid pressure for projection of the plurality of projectable arm assemblies 6.

As shown in Fig. 1, the hydraulic section 15 further comprises a second controllable valve 17 controlling the second fluid pressure. The controllable valve(s) is/are electronically adjustable. The downhole self-propelling wireline tool 1 has two wheel/drive sections 30where one is rotated 90 degrees in relation to the other in order centralise the tool in the well. In other operations where centralisation is not important, the downhole self-propelling wireline tool 1 only has one drive section 30, as shown in Fig. 2. Such operation could be a milling or grinding operation in which the downhole self-propelling wireline tool comprises an operational tool as shown in Fig. 2.

The downhole self-propelling wireline tool 1 further comprises a compensator 35 for providing a predetermined overpressure in the tool so that the well fluid does not enter into the tool and jeopardise the function of the tool, and so that the dirty well fluid is not mixed with the hydraulic fluid in the tool.

The downhole self-propelling wireline tool 1 further comprises a surface readout module 29 for sending measured tool parameters, such as the first fluid pressure, the second fluid pressure, the operational rotational speed of the electric motor 4, and/or the motor output torque to surface.

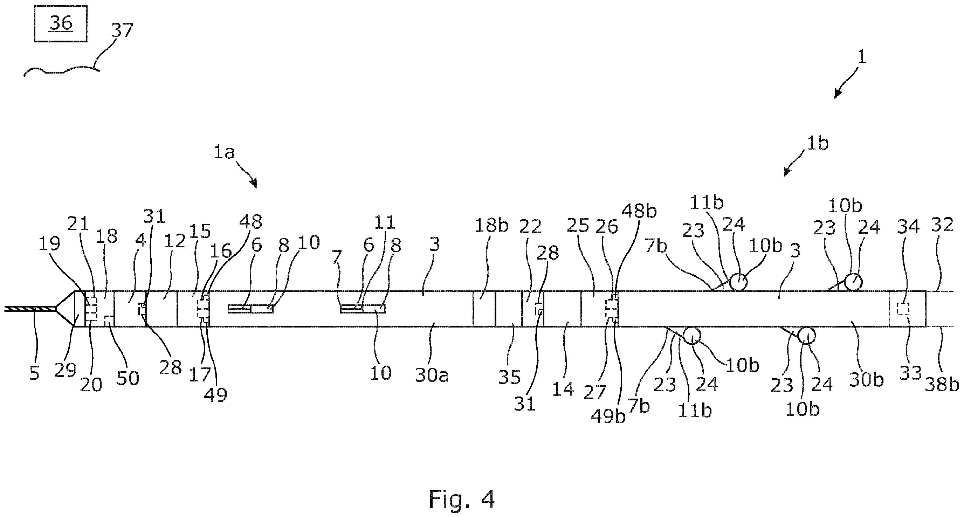

In Fig. 2, the downhole self-propelling wireline tool 1 comprises an operational tool 38 such as a logging tool 38b (shown in Fig. 4) or a machining tool 32 having a bit 39 for performing a machining operation, and a compression sub 33 comprising a load cell 34 adjacent to the machining tool in order to measure the actual weight on the bit. The operational tool 38 further comprises an electric control unit 40, a compensator 41, an electric motor 42 and a gear section 43 for rotating the bit at another speed than the rotational speed of the motor 42, often at a lower speed. The compression sub 33 comprising the load cell 34 is arranged between the electric control unit 40 and the drive section comprising the wheels 8 on the projectable arm assemblies 6.

When the downhole self-propelling wireline tool 1 further comprises the logging tool 38b, and the downhole self-propelling wireline tool has propelled itself to the point where the logging operation is to be performed, then the operational rotational speed is set at a predetermined constant operational rotational speed of the electric motor 4.

When the downhole self-propelling wireline tool 1 further comprises the operational tool 32 having the bit 39 for performing an operation downhole, such as milling, and the downhole self-propelling wireline tool has propelled itself to the point where the milling operation is to be performed, the method further comprises measuring 130b the second fluid pressure, estimating 140c a weight on bit (WOB), comparing 150a the estimated weight on bit with a predetermined weight on bit, and adjusting 160e the second fluid pressure based on the comparison, as shown in Fig. 6. The steps 130b, 140c, 150a and 160e may be a supplement to or instead of steps 130-160.

When the downhole self-propelling wireline tool 1 further comprises the compression sub 33 and the operational tool 32 having the bit 39 for performing an operation downhole, such as milling, the method may further comprise measuring 130c a weight on the bit by means of the compression sub, comparing 150b the measured weight on bit with a predetermined weight on bit, and adjusting 160f the second fluid pressure based on the comparison, as shown in Fig. 6. The steps 130c, 150b and 160f may be a supplement to or instead of steps 130-160.

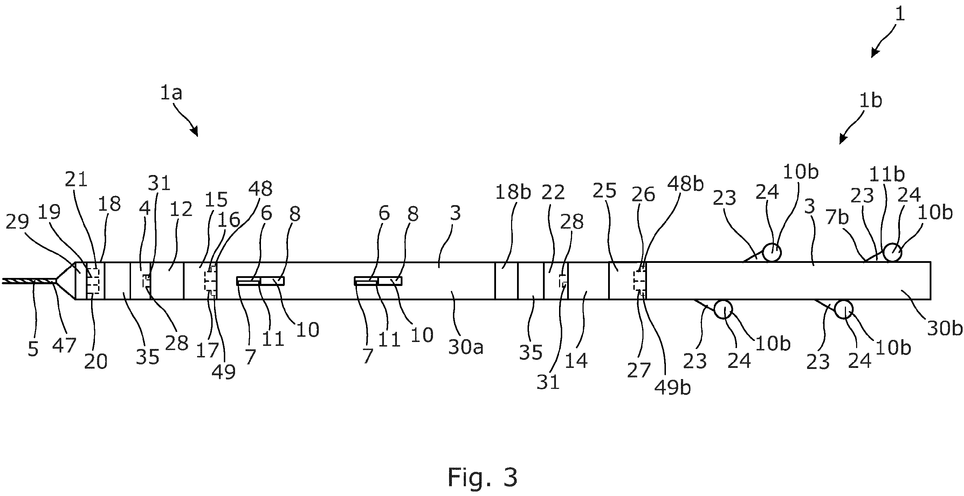

In Fig. 3, the electric motor 4 is a first electric motor 4, and the downhole self-propelling wireline tool 1 comprises a second electric motor 22 driving a second hydraulic pump 14, the first electric motor driving the first hydraulic pump. The first electric motor 4 thus drives a first hydraulic pump 12 for generating fluid to project the projectable arm assemblies 6 and generating fluid for rotating the wheels 8 of one drive section 30a, and the second electric motor 22 thus drives a second hydraulic pump 14 for generating fluid to project the projectable arm assemblies 23 and fluid to rotate the wheels 24 of a second drive section 30b. The second hydraulic pump 14 generates a third fluid pressure for projection of a second plurality of projectable arm assemblies 23. The second hydraulic pump 14 generates a fourth fluid pressure for driving the hydraulic motor(s) 10, rotating a second plurality of wheel(s) 24. The hydraulic section 15 for the first drive section 30a is a first hydraulic section 15, and the downhole self-propelling wireline tool 1 further comprises a second hydraulic section 25 comprising a third controllable valve 26 controlling the third fluid pressure and a fourth controllable valve 27 controlling the fourth fluid pressure. Both the first controllable valve 16 and the second controllable valve 17 are electronically controllable by means of the electric control unit 18, and the third controllable valve 26 and the fourth controllable valve 27 are electronically controllable by means of a second electric control unit 18b. The first electric motor 4 and/or second electric motor 22 is/are a synchronic motor(s).

The tool string of Fig. 3 is thus two downhole self-propelling wireline tools 1 mounted as one wireline tool where each has a separate electric control unit, a separate electric motor, one or two hydraulic pumps, a hydraulic section, and one or more drive sections 30. The first downhole self-propelling wireline tool 1a comprises the electric control unit 18, the electric motor 4, one or two hydraulic pumps 12, 14, the hydraulic section 15 and the drive section 30, 30a with wheels 8 on projectable arm assemblies 6. The second downhole self-propelling wireline tool 1b comprises the electric control unit 18, the electric motor 22, one or two hydraulic pumps 12, 14, the hydraulic section 15 and the drive section 30, 30b with wheels 24 on projectable arm assemblies 23. The plurality of projectable arm assemblies 23 are movably connected at a first arm end 7b with the tool body 3, and each wheel comprises a hydraulic motor 10b for rotation of the wheel and provides a self-propelling movement, each wheel being connected with a second arm end 11b of one of the arm assemblies 23.The first downhole self-propelling wireline tool 1a is connected to the cable head 44 and the wireline 5. The hydraulic section 15 is configured to measure the first and second fluid pressures by means of the first pressure sensor 49 and the second pressure sensor 48 and to control the valves based on the measured first and second fluid pressures. The second hydraulic section 25 is configured to measure the third and fourth fluid pressures by means of the third pressure sensor 48b and the fourth pressure sensor 49b and to control the valves based on the measured third and fourth fluid pressures. The controllable valve(s) 16, 17, 26, 27 is/are a controllable pressure relief valve(s). The power to the tool string is thus divided equally between the first and second electric motors 4, 22 so that each motor is limited to half of the current limit to ensure that the tool string does not exceed the allowed current limit on the wireline.

The step of running 110 comprises running both the first and second downhole self-propelling wireline tools 1, la, 1b into a wellbore2, and step of supplying 120 electric power comprises supplying electric power to both the first and second downhole self-propelling wireline tools to operate the first and second downhole self-propelling wireline tools at a first speed to urge the tool string through the wellbore at a first force, and the step of determining 130 comprises determining a motor output torque of both the first and second electric motors 4, 22, and the step of determining 140 comprises determining a maximum allowable motor rotational speed based on the motor output torque of both the first and second electric motors, and the step of comparing 150 comprises comparing the operational rotational speed of both the first and second electric motors with the maximum allowable motor rotational speed, and wherein the step of adjusting 160 comprises adjusting the operational rotational speed of both the first and second electric motors based on the comparison in order to adjust the first speed to a second speed if the operational rotational speed is higher than the maximum allowable motor rotational speed.

In Fig. 3, the electric control unit(s) 18 further comprise(s) a voltage control unit 19 having an overvoltage protection unit so that voltage fed to the tool is kept more constant, and an electric current measuring unit 20. In Fig. 4, the electric control unit 18 comprises a capacitor 50 functioning as an energy storage unit or accumulator. The downhole self-propelling wireline tool 1 further comprises a machining tool 32 for performing a machining operation and a compression sub 33 comprising a load cell 34 adjacent to the machining tool. In another embodiment, the electric control unit(s) 18 control(s) the controllable valve(s) based on the electric current and/or electric voltage measured by the electric control unit.

In Fig. 3, each electric motor 4, 22 may also comprise a power or current-limiting unit 31 in order to distribute a first part of the current from the wireline to power the first electric motor 4 and a second part of the current to power the second electric motor 22. The first and second downhole self-propelling wireline tools la, 1b may be electrically connected in parallel. The downhole self-propelling wireline tool may also comprise a current distribution unit 21 in order to distribute a first part of the current from the wireline to power the first electric motor 4 and a second part of the current to power the second electric motor 22. The current distribution unit 21 may be applied instead of the power-limiting units in order to distribute a first part of the current from the wireline to power the first electric motor 4 and a second part of the current to power the second electric motor 22.

In Fig. 4, the downhole self-propelling wireline tool 1 is a user interface 36 at surface 37 for controlling at least part of the downhole self-propelling wireline tool. Thus, the field engineer may be informed of the current limit of the wireline/cable and through the user interface set the current limit for each motor of the tool, and the power-limiting units 31 or the current distribution unit 21 distributes the current equally between the first downhole self-propelling wireline tool 1a and the second downhole self-propelling wireline tool 1b forming the tool 1, so that both are able to drive at the same speed and therefore drive the tool string at the same speed. The first electric motor 4 may require more power than the second electric motor 22 in order to drive the tool string at the same speed, but this is possible as the first and second downhole self-propelling wireline tools are electrically connected in parallel. The downhole self-propelling wireline tool string may further comprise a stroking tool, even though not shown.

A stroking tool is a tool providing an axial force. The stroking tool comprises an electric motor for driving a pump. The pump pumps fluid into a piston housing to move a piston acting therein. The piston is arranged on the stroker shaft. The pump may pump fluid out of the piston housing on one side and simultaneously suck fluid in on the other side of the piston.

By "fluid" or "well fluid" is meant any kind of fluid that may be present in oil or gas wells downhole, such as natural gas, oil, oil mud, crude oil, water, etc. By "gas" is meant any kind of gas composition present in a well, completion or open hole, and by "oil" is meant any kind of oil composition, such as crude oil, an oil-containing fluid, etc. Gas, oil and water fluids may thus all comprise other elements or substances than gas, oil and/or water, respectively.

By "casing" or "well tubular metal structure" is meant any kind of pipe, tubing, tubular, liner, string, etc., used downhole in relation to oil or natural gas production.

Although the invention has been described above in connection with preferred embodiments of the invention, it will be evident to a person skilled in the art that several modifications are conceivable without departing from the invention as defined by the following claims.

## Claims

1. A method (100) for controlling a tool string having a downhole self-propelling wireline tool (1) having wheels (8) rotated by means of hydraulics and connected to projectable arm assemblies (6) projected by hydraulics, comprising:
- running (110) a downhole self-propelling wireline tool (1) into a wellbore (2), the downhole self-propelling wireline tool being connected to a second end (47) of a wireline (5) and a first end of the wireline being connected to a power supply, the downhole self-propelling wireline tool having a tool body (3) and a plurality of wheels (8) rotated by means of hydraulics, and each wheel being connected to a projectable arm assembly (6) projectable from the tool body by means of hydraulic fluid from a first hydraulic pump (12), the downhole self-propelling wireline tool having an electric motor (4) rotating at an operational rotational speed for driving the first pump,
- supplying (120) electric power to the downhole self-propelling wireline tool to operate the downhole self-propelling wireline tool at a first speed to urge the downhole self-propelling wireline tool through the wellbore at a first force,
- determining (130) a motor output torque of the electric motor,
- determining (140) a maximum allowable motor rotational speed based on the motor output torque, and
- comparing (150) the operational rotational speed with the maximum allowable motor rotational speed,
wherein the method further comprises adjusting (160) the operational rotational speed of the electric motor based on the comparison in order to adjust the first speed to a second speed if the operational rotational speed is higher than the maximum allowable motor rotational speed.

2. The method according to claim 1, wherein adjusting the operational rotational speed of the electric motor based on the comparison is performed independently of any condition of the wireline, such as drag in the wireline, wireline tension, or wireline resistance.

3. The method according to claim 1 or 2, wherein adjusting the operational rotational speed of the electric motor based on the comparison is performed independently of any pump condition, such as pump flow, pump pressure, or stroke length.

4. The method according to claim 1 or 2, wherein adjusting the operational rotational speed of the electric motor based on the comparison is performed independently of any condition of the speed of the downhole self-propelling wireline tool.

5. The method according to any of the preceding claims, wherein the first speed of the downhole self-propelling wireline tool is adjusted to the second speed by adjusting the operational rotational speed of the electric motor.

6. The method according to any of the preceding claims, further comprising determining (145) the operational rotational speed of the electric motor.

7. The method according to any of the preceding claims, wherein determining the output torque of the electric motor is performed by measuring (125) the current over the three phases in the electric motor.

8. The method according to any of the preceding claims, further comprising measuring (135) a current demand/input of the electric motor and measuring (135b) a voltage input of the electric motor.

9. The method according to any of the preceding claims, wherein determining (140) a maximum allowable motor speed based on the motor output torque is also based on a measured current and a measured voltage of the electric motor.

10. The method according to any of claims 1-7, wherein the adjusting (160a) of the operational rotational speed of the electric motor is based on a measured current demand of the electric motor or a calculated load on the electric motor.

11. The method according to any of the preceding claims, wherein each wheel comprises a hydraulic motor (10) for rotation of the wheel and provides a self-propelling movement, each wheel being connected with a second arm end (11) of one of the projectable arm assemblies, the plurality of projectable arm assemblies (6) being movably connected at a first arm end (7) with the tool body and being projectable from the tool body by means of a first fluid having a first fluid pressure, and the downhole self-propelling wireline tool further comprising a pressure sensor measuring (130d) the first fluid pressure.

12. The method according to claim 11, wherein each hydraulic motor is driven by a second fluid having a second fluid pressure from the first hydraulic pump or a second hydraulic pump driven by the electric motor.

13. The method according to claim 11, wherein adjusting (160c) the rotational speed of the electric motor is based on the first fluid pressure.

14. The method according to any of claims 11-13, further comprising controlling (170) the first fluid pressure based on the second pressure by means of a first controllable valve (16) in a hydraulic section (15) of the downhole self-propelling wireline tool.

15. A downhole hydraulically driven self-propelling wireline tool configured to perform the method according to any of the preceding claims.
